# EUROPEAN PATENT APPLICATION

(11) **EP 4 297 163 A1**
(43) Date of publication of application: **27.12.2023**
(21) Application number: 23179174.0
(22) Date of filing: 14.06.2023
(51) Int. Cl.: H01M 50/291, H01M 50/289, H01M 50/204, H01M 50/242, H01M 10/613, H01M 10/6554

(54) **BATTERY MODULE**

(30) Priority: 24.06.2022 CN 202221609533 U
(71) Applicant: Volkswagen Aktiengesellschaft, 38440 Wolfsburg (DE)
(72) Inventor: Liming, Wang, 38436 Wolfsburg (DE); Jing, Zhou, 38436 Wollfsburg (DE); Ning, Wang, 38436 Wolfsburg (DE); Yixin, Yuan, 38436 Wolfsburg (DE)

(57) **Abstract**

The present utility model provides a battery module, comprising: a case, comprising a first plate and a second plate opposite the first plate; and two cell stacks, each cell stack comprising multiple cells stacked in a stacking direction, and the two cell stacks being installed adjacent to each other in the stacking direction between the first plate and the second plate, wherein the battery module further comprises a crossbeam arranged between two adjacent ends of the two cell stacks, such that each of the two cell stacks is subjected to pressure from the crossbeam in the stacking direction. The battery module of the present utility model can simplify the assembly process of the battery module and increase the structural strength of the battery module.

## Description

### Technical field

The present utility model relates to the technical field of batteries, in particular to a battery module.

### Background art

As battery technology develops and more importance is attached to the utilization of new energy sources, battery modules are being used to an ever increasing extent as sources of motive power for various apparatuses, for example providing traction force in new energy vehicles. A battery module generally has the characteristics of high voltage and high capacity, and must therefore comprise multiple cells. In existing battery module assembly processes, generally, multiple cells are first stacked and pre-grouped, buses and sampling wiring harnesses are fitted by welding, the multiple cells are pre-connected electrically, pre-grouped cell stacks are formed, then the pre-grouped cell stacks are fixed to the bottom of a case directly using structural glue, thereby forming the battery module.

In existing battery modules, the positioning, clamping and fixing of the cell stacks is generally achieved by bolt connection using end plate members of the battery module or the cell stacks. In this case, the connection of bolts and the end plate members of the battery module makes the assembly process step tedious, increases the weight of the battery module, and affects the energy density of the battery module.

In addition, in the process of operation of the battery module, the cells undergo a cyclic process of charging and discharging, accompanied by cell ageing, so a swelling force will arise inside the cells. When the swelling force is significant, various wiring harnesses of the cells might develop the risk of damage to electrical connections due to deformation, breakage, etc. Furthermore, existing battery modules rely solely on sidewalls of the battery case to provide side anti-collision functionality, but adequate anti-collision performance generally cannot be provided. In the event of a side collision, there might be a potential risk of structural failure of the battery module.

Thus, improvements need to be made to existing battery modules, to overcome at least one of the shortcomings in the prior art.

### Summary of the utility model

An objective of the present utility model is to provide an improved battery module, to simplify the assembly process of the battery module and increase the structural strength of the battery module.

To this end, according to one aspect of the present utility model, a battery module is provided, comprising: a case, comprising a first plate and a second plate opposite the first plate; and two cell stacks, each of the two cell stacks comprising multiple cells stacked in a stacking direction, and the two cell stacks being installed adjacent to each other in the stacking direction between the first plate and the second plate, wherein the battery module further comprises a crossbeam arranged between two adjacent ends of the two cell stacks, such that each of the two cell stacks is subjected to pressure from the crossbeam in the stacking direction.

According to an embodiment of the present utility model, the case further comprises two side plates extending between the first plate and the second plate, the crossbeam being fixedly connected between the two side plates.

According to an embodiment of the present utility model, the crossbeam has a wedge-shaped cross section, and the two ends each comprise a wedge-shaped part matching the wedge shape of the crossbeam, the crossbeam pressing against the wedge-shaped parts.

According to an embodiment of the present utility model, the crossbeam has a symmetrical wedge-shaped cross section, and the two ends comprise wedge-shaped parts that are symmetrical with each other.

According to an embodiment of the present utility model, the crossbeam is fixedly connected between the two side plates by bolts or snap-fit.

According to an embodiment of the present utility model, the crossbeam and the wedge-shaped part are each made of a hollow profile.

According to an embodiment of the present utility model, the case further comprises a bottom plate, the two cell stacks being adhered to the bottom plate by means of an adhesive.

According to an embodiment of the present utility model, the bottom plate is provided with an opening, and the two cell stacks are arranged to correspond to the opening.

According to an embodiment of the present utility model, at least one of the first plate, the second plate, the side plates and the bottom plate is made of a hollow profile.

According to an embodiment of the present utility model, the battery module further comprises an additional plate arranged below the bottom plate.

According to an embodiment of the present utility model, the case comprises two end plates and at least one partition plate arranged between the two side plates, the at least one partition plate being fixedly connected to the two side plates, the first plate and the second plate being two adjacent plates among the end plates and the at least one partition plate.

According to an embodiment of the present utility model, the case further comprises a connecting plate arranged between the two end plates, the connecting plate being fixedly connected to the two end plates.

According to an embodiment of the present utility model, the first plate and the second plate are further each provided with a bolt connection mechanism, configured to clamp and fix the two cell stacks and the crossbeam.

Since the battery module of the present utility model uses the crossbeam to clamp and fix the cell stacks and provide protection for the battery module against lateral collision, the battery module can have a simpler assembly process and be more manufacturing-friendly, while the number of components can be reduced, thus lowering costs. Furthermore, the crossbeam can also increase the structural strength and safety of the battery module.

### Brief description of the drawings

Exemplary embodiments of the present utility model are described in detail below with reference to the drawings, but it should be understood that the embodiments described below are merely intended to explain the present utility model, without limiting the scope thereof. In the drawings:
Fig. 1 is a schematic top view of a battery module according to an exemplary embodiment of the present utility model.
Fig. 2 is a schematic perspective drawing of the case of the battery module shown in Fig. 1.
Fig. 3 is a schematic perspective drawing of the case and cell stacks of the battery module shown in Fig. 1, wherein the cell stacks are shown as being about to be installed in the case.
Fig. 4 is a schematic perspective drawing of the case, cell stacks and crossbeams of the battery module shown in Fig. 1, wherein the cell stacks are shown as having been already installed in the case, and the crossbeams are shown as being about to be installed in the case.
Fig. 5 is a schematic partial section taken along line C-C' in Fig. 1.

### Detailed description of embodiments

Preferred embodiments of the present utility model are described in detail below with reference to examples. However, those skilled in the art should understand that these exemplary embodiments do not signify any limitation of the present utility model. Furthermore, in the absence of conflict, features in embodiments of the present utility model may be combined with each other. In the drawings, other components have been omitted for conciseness, but this does not mean that the battery module of the present utility model cannot include other components.

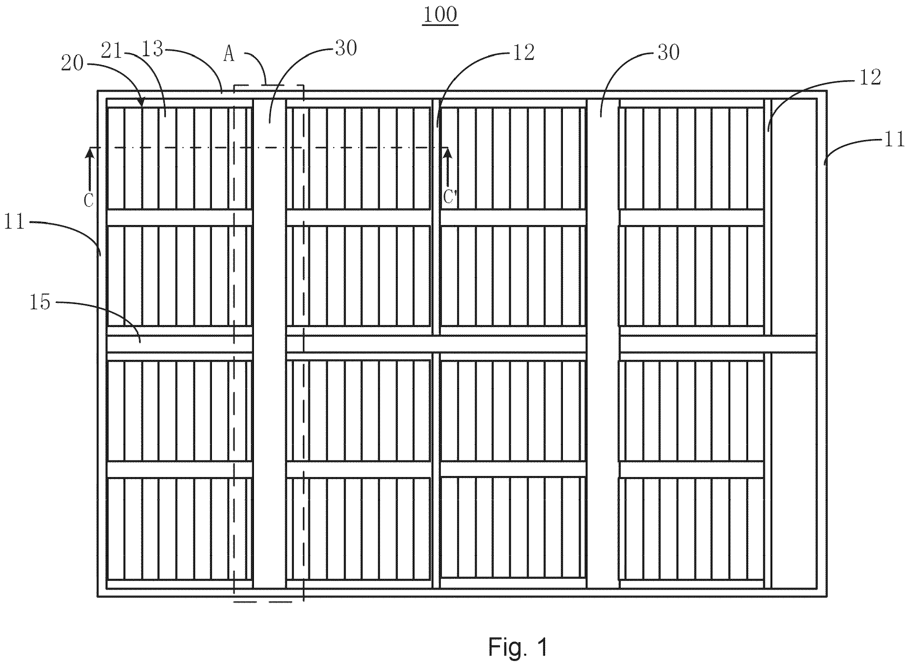

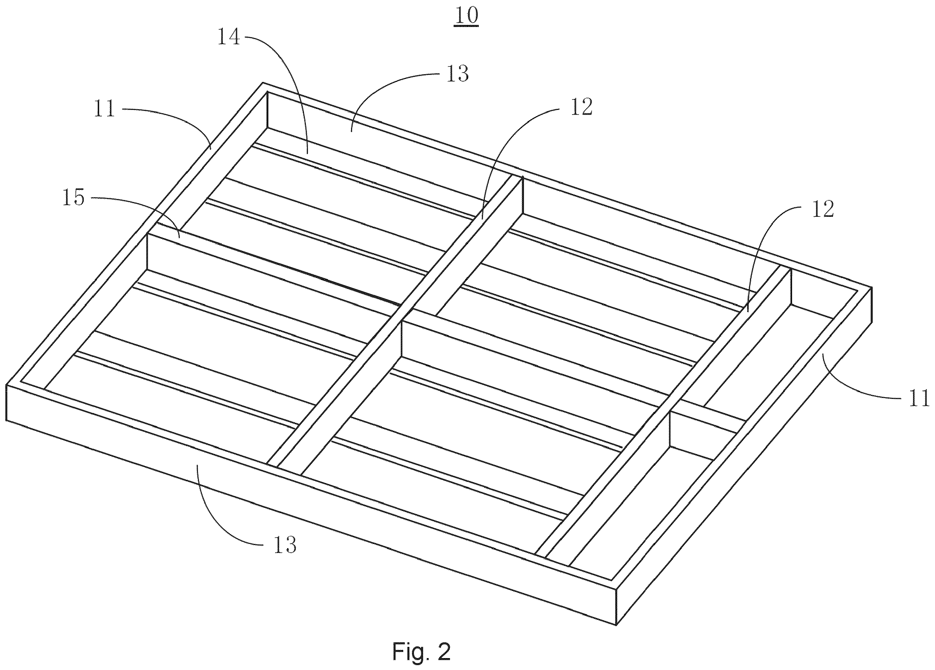

As shown in Fig. 1, a battery module 100 according to an exemplary embodiment of the present utility model comprises a case 10, cell stacks 20 and crossbeams 30, wherein the cell stacks 20 are installed in the case 10, and each crossbeam 30 is arranged between adjacent ends of two adjacent cell stacks 20. Region A in Fig. 1 shows a position where a crossbeam 30 is located. It should be pointed out that Fig. 1 shows two crossbeams 30 and a total of 16 cell stacks combined as pairs, but the present utility model is not limited to the specific number of cell stacks 20 and crossbeams 30 shown, and may have a larger or smaller number of cell stacks 20 and crossbeams 30. The specific structures and assembly process of the case 10, the cell stacks 20 and the crossbeams 30 are described further below with reference to Figs. 2 - 5.

As shown in Fig. 2, the case 10 comprises two end plates 11 and two side plates 13 extending between the two end plates 11, and a framework structure of the case 10 is thus formed. Additionally, a partition plate 12 may also be provided between the two side plates 13, and a connecting plate 15 may also be provided between the two end plates 11, wherein the partition plate 12 is fixedly connected to the two side plates 13, and the connecting plate 15 is fixedly connected to the two end plates 11, to increase the structural strength of the case 10 and separate different cell stacks 20. In addition, the case 10 may also comprise a bottom plate, and the bottom plate 14 may be provided with openings. However, it should be pointed out that the present utility model is not limited to the case structure shown, and may comprise a larger or smaller number of partition plates 12 and connecting plates 15, or may even have no partition plate 12 and no connecting plate 15, and may also comprise other structural components such as a mounting plate or mounting seat, etc. for mounting an electronic device, or may omit a particular component in the case 10, for example may omit the side plates 13 and the bottom plate 14 of the case 10 when a peripheral mounting mechanism is able to provide lateral and bottom fixing and protection; the present utility model will not be described in further detail in this regard.

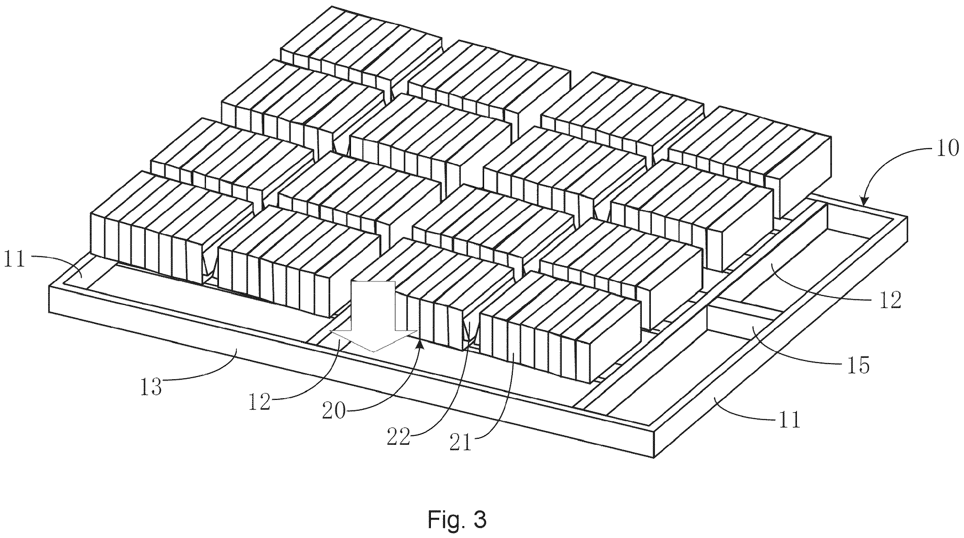

16 cell stacks 20 are shown in Fig. 3, each cell stack 20 comprising multiple cells 21 stacked together in a stacking direction, with adjacent cells 21 being joined together by an adhesive for example. Each cell 21 has a terminal, and the terminals of adjacent cells 21 are connected to each other, thereby forming pre-grouped cell stacks 20. It should be pointed out that the cells 21 may also form pre-grouped cell stacks 20 in another manner known in the art; the present utility model imposes no restrictions in this respect.

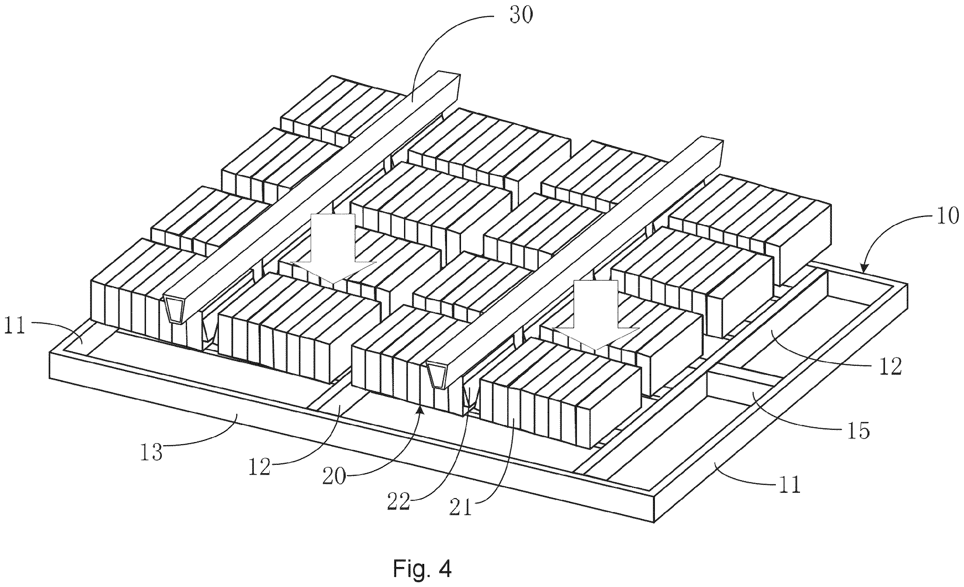

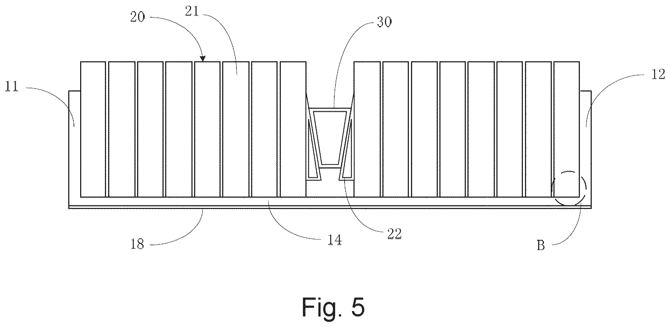

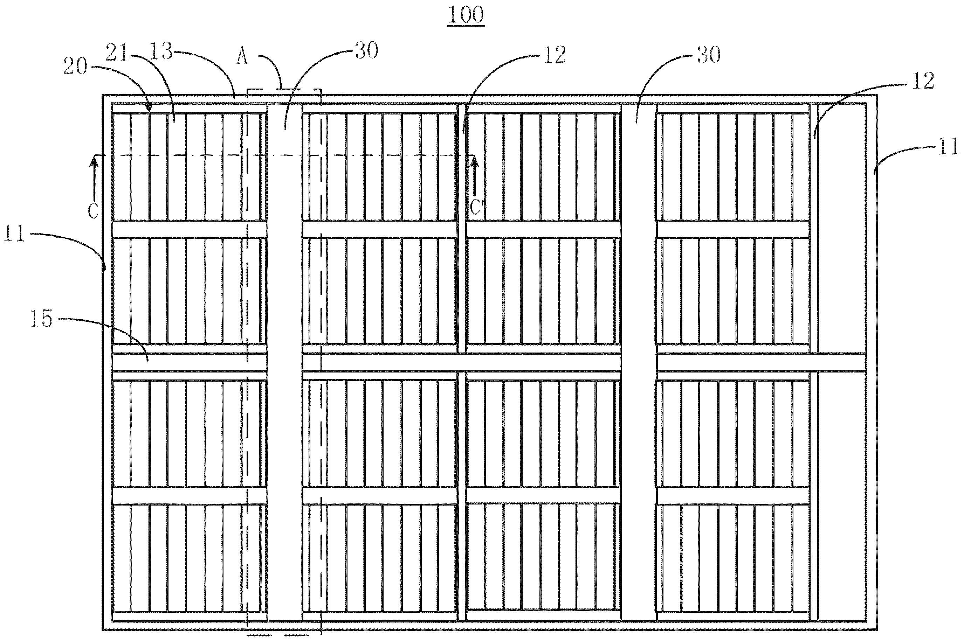

As shown in Fig. 3, the 16 cell stacks 20 are divided into 8 pairs, each pair comprising two cell stacks 20 adjacent to each other in the stacking direction. These cell stacks 20 may be installed in 4 spaces of the case 10 in the direction of the arrow shown in Fig. 3, the spaces being separated by the end plates 11, the partition plate 12, the side plates 13 and the connecting plate 15. The cell stacks 20 may correspond to the openings in the bottom plate 14, so as to prevent heat from spreading to other cell stacks 20 when one cell stack 20 overheats or discharges gas. Furthermore, as shown in Fig. 3, ends of two adjacent cell stacks 20 are further provided with wedge-shaped parts 22. The wedge-shaped parts 22 may be adhered to the ends of the cell stacks 20 by means of an adhesive. The wedge-shaped parts 22 will be further described below with reference to Figs. 4 and 5.

As shown in Figs. 4 and 5, the crossbeam 30 has a wedge-shaped cross section and is disposed between the ends, provided with the wedge-shaped parts 22, of two adjacent cell stacks 20, wherein the shape of the wedge-shaped parts 22 matches the wedge shape of the cross section of the crossbeam 30. Referring to Fig. 4, when the cell stacks 20 have been installed in the case 10, the crossbeam 30 may be inserted between the wedge-shaped parts 22 of adjacent cell stacks 20 as shown by the arrows in Fig. 4. In the process of pushing the crossbeam 30 downwards, and as the crossbeam 30 presses against the wedge-shaped parts 22, a compressive force exerted in the stacking direction arises; as a result, the two cell stacks 20 are subjected to pressure from the crossbeam 30 in the stacking direction, and the cell stacks 20 can thus be clamped and fixed. The crossbeam 30 can then be fixedly connected to the side plates 13 of the case 10 by screws or snap-fit (not shown), etc. thereby providing the battery module with protection against lateral collision, so as to maintain the structural integrity of the battery module during lateral collision. A wiring harness of each cell stack 20 can then be connected to an electronic device and a bus arranged on the case 10, so as to form the battery module 100 for supplying power to the outside or being charged.

Figs. 4 and 5 only show the case where two cell stacks 20 are clamped and fixed using one crossbeam 30, but the present utility model is not limited to this. For example, three, four or more cell stacks 20 may be arranged between a first plate and a second plate that are opposite each other, with one crossbeam 30 inserted between each pair of adjacent cell stacks 20, and this can likewise achieve the clamping and fixing of more than two cell stacks 20. The first plate and second plate may respectively be two adjacent plates among the end plates 11 and the partition plate 12 of the case 10. For example, in a case that does not comprise a partition plate 12, the first plate and second plate may be the two end plates 11, and in a case that comprises more than one partition plate 12, the first plate and second plate may respectively be two adjacent plates among the end plates 11 and the partition plates 12, for example, an end plate and a partition plate, a partition plate and a partition plate, or a partition plate and an end plate, respectively.

It should be pointed out that the present utility model is not limited to the structure described above in which the wedge-shaped parts 22 of the cell stacks 20 match the wedge shape of the crossbeam 30, and can achieve protection of the battery module against lateral collision as well as clamping and fixing of the cell stacks without a wedge-shaped mating structure. For example, lateral protection is provided by arranging a crossbeam between two adjacent cell stacks (with neither the cell stacks nor the crossbeam comprising a wedge-shaped structure), and the two cell stacks and the crossbeam are clamped together by providing a bolt connection mechanism (not shown) on each of the first plate and second plate, so as to clamp and fix the cell stacks. Of course, the abovementioned bolt connection mechanism may also be provided when a wedge-shaped mating structure is included, to further improve clamping and fixing of the cell stacks.

As shown in Fig. 5, preferably, the wedge shape of the cross section of the crossbeam 30 is a symmetrical shape, and the wedge-shaped parts 22 at the ends of the two adjacent cell stacks 20 are symmetrical with each other. However, the wedge shape of the cross section of the crossbeam 30 may also be asymmetrical, and correspondingly, the wedge-shaped parts 22 at the ends of the two adjacent cell stacks 20 may also be asymmetrical.

The crossbeam 30 and the wedge-shaped parts 22 may each be made of a hollow profile, and one or more of the end plates 11, the side plates 13, the partition plate 12, the bottom plate 14 and the connecting plate 15 may also be made of a hollow profile; in this way, the weight of the battery module 100 can be reduced.

To further increase the structural strength of the battery module 100, an adhesive such as structural glue may be applied to the bottom plate 14 of the case 10 before the cell stacks 20 are installed in the case 10, for example, applied within the region B in Fig. 5, such that the cell stacks 20 can be adhered to the bottom plate 14 by means of the adhesive.

As shown in Fig. 5, the battery module 100 may further comprise an additional plate 18 arranged below the bottom plate 14, for example, a cooling plate, an insulating plate, etc.

In the battery module of the present utility model, the positioning, clamping and fixing of the cell stacks can be achieved in a single operation in the process of integration by means of the crossbeam and the wedge-shaped parts, making it simpler for the cell stacks to form the battery module; moreover, end plate members and bolt fasteners, etc. are avoided, so the number of components can be reduced, lowering costs, and the structural strength and safety of the battery module are increased.

The present utility model has been described in detail above with reference to particular embodiments. Obviously, all of the embodiments described above and shown in the drawings should be understood to be exemplary, without limiting the present utility model. Those skilled in the art could make various alterations or amendments to the present utility model without departing from the spirit thereof, all such alterations or amendments falling within the scope of the present utility model.

## Claims

1. Battery module (100), comprising:
a case (10), comprising a first plate and a second plate opposite the first plate; and
two cell stacks (20), each of the two cell stacks (20) comprising multiple cells (21) stacked in a stacking direction, and the two cell stacks (20) being installed adjacent to each other in the stacking direction between the first plate and the second plate;
**characterized in that** the battery module (100) further comprises a crossbeam (30) arranged between two adjacent ends of the two cell stacks (20), such that each of the two cell stacks (20) is subjected to pressure from the crossbeam (30) in the stacking direction.

2. Battery module (100) according to Claim 1, **characterized in that** the case (10) further comprises two side plates (13) extending between the first plate and the second plate, the crossbeam (30) being fixedly connected between the two side plates (13).

3. Battery module (100) according to Claim 2, **characterized in that** the crossbeam (30) has a wedge-shaped cross section, and the two ends each comprise a wedge-shaped part (22) matching the wedge shape of the crossbeam (30), the crossbeam (30) pressing against the wedge-shaped parts (22).

4. Battery module (100) according to Claim 3, **characterized in that** the crossbeam (30) has a symmetrical wedge-shaped cross section, and the two ends comprise wedge-shaped parts (22) that are symmetrical with each other.

5. Battery module (100) according to Claim 2, **characterized in that** the crossbeam (30) is fixedly connected between the two side plates (13) by bolts or snap-fit.

6. Battery module (100) according to Claim 3, **characterized in that** the crossbeam (30) and the wedge-shaped part (22) are each made of a hollow profile.

7. Battery module (100) according to Claim 2, **characterized in that** the case (10) further comprises a bottom plate (14), the two cell stacks (20) being adhered to the bottom plate (14) by means of an adhesive.

8. Battery module (100) according to Claim 7, **characterized in that** the bottom plate (14) is provided with an opening, and the two cell stacks (20) are arranged to correspond to the opening.

9. Battery module (100) according to Claim 7, **characterized in that** at least one of the first plate, the second plate, the side plates (13) and the bottom plate (14) is made of a hollow profile.

10. Battery module (100) according to Claim 7, **characterized in that** the battery module (100) further comprises an additional plate (18) arranged below the bottom plate (14).

11. Battery module (100) according to Claim 2, **characterized in that** the case (10) comprises two end plates (11) and at least one partition plate (12) arranged between the two side plates (13), the at least one partition plate (12) being fixedly connected to the two side plates (13), the first plate and the second plate being two adjacent plates among the end plates (11) and the at least one partition plate (12).

12. Battery module (100) according to Claim 11, **characterized in that** the case (10) further comprises a connecting plate (15) arranged between the two end plates (11), the connecting plate (15) being fixedly connected to the two end plates (11).

13. Battery module (100) according to Claim 1, **characterized in that** the first plate and the second plate are further each provided with a bolt connection mechanism, configured to clamp and fix the two cell stacks (20) and the crossbeam (30).
